# EUROPEAN PATENT SPECIFICATION

(11) **EP 1 671 830 B1**
(45) Date of publication and mention of the grant of the patent: **06.08.2008**
(21) Application number: 04030206.9
(22) Date of filing: 20.12.2004
(51) Int. Cl.: B60J 7/22

(54) **Foldable wind breaker**
Faltbarer Windschutz
Ecran pliable protégeant du vent

(43) Date of publication of application: 21.06.2006
(73) Proprietor: Ford Global Technologies, LLC, Dearborn, MI 48126 (US)
(72) Inventor: Eklind, Björn, 426 76 Västra Frölunda (SE); Pehrson, Hans, 423 39 Torslanda (SE)
(74) Representative: Engstrand, Maria Linnéa

(56) References cited:
- DE-U1- 9 004 971
- DE-U1- 29 515 413
- US-B2- 6 582 008

## Description

### Field of the invention

The invention relates to a foldable wind breaker for a convertible car, comprising a wind blocker panel for blocking air flow behind seats in the car, said wind blocker panel being connected to a cover panel for covering a compartment of the car.

### Background of the invention

A convertible car is a car in which substantially the entire roof is removable, or stowable, so that the car can be driven "al fresco". Such cars are commonly termed "convertibles".

Wind breaker devices for convertibles are known and used for reducing or controlling the air flow around one or both front seats when driving. A detachable wind breaker device is formed as a separate device intended to be arranged in a convertible when desired.

There are at least two types of known detachable wind breaker devices - roll-up devices and foldable devices. Roll-up devices are devices generally formed from a web material that is stored on a roller and rolled up from the roller when in use, similar to a roller blind. Foldable devices are devices formed from panels that are foldable from a storage position to a wind breaker position where the panels extend to form the wind breaker. The foldable devices have advantages in that they are easy to handle due to the relatively stable construction of the panels.

One particularly useful type of foldable wind breaker device comprises a wind blocker panel to be arranged so as to extend substantially vertically from the passenger compartment in order to achieve the primary wind blocking effect adjacent to a passenger or driver seat and a cover panel to be arranged so as extend substantially horizontally in order to cover at least a portion of a compartment of the passenger car. The cover panel provides an additional wind blocking function in that air flow being redirected due to the wind blocker panel may be inhibited from swirling back towards the seats or into the compartment where luggage or other items may be stored. This type of wind breaker is normally foldable at least about a connection axis between the wind blocker panel and the cover panel.

US 6 582 008 (Maeurle) describes a detachable wind stop device comprising a wind blocker consisting of two wind blocker parts which can be folded about a wind blocker folding axis, and a cover with two cover parts for a section of a passenger compartment opening. The wind stop device is foldable for storage.

DE 295 15 413 U1, discloses a cover panel of a wind breaker for a vehicle wherein the cover panel comprises lid which in turn comprises a net provided with a lining. The cover panel further comprises a frame 4 and the frame and the lining are adapted to be engaged with one another by means of tensioning means. According to DE 295 15 413 U1, the purpose of the tensioning means is to allow the lid to be removed from the frame, e.g. in order to clean the net, without having to remove the wind breaker from the vehicle.

When a wind breaker device as described above is installed in a convertible, the cover will cover at least a portion of the passenger compartment. Accordingly, access to the compartment may be troublesome which reduces the usefulness of the compartment e.g. for loading and unloading luggage.

### Summary of the invention

Thus, the object of the invention is to provide a foldable wind breaker which allows access to the passenger compartment while enabling constructions still fulfilling other requirements of a wind breaker such as e. g. sufficient wind break capacity, easy instalment and convenient storage.

The object of the invention is achieved by a foldable wind breaker for a convertible car comprising a wind blocker panel for blocking air flow behind seats in the car, and a cover panel being connected to the wind blocker panel, wherein said cover panel defines a frame and a lid, said frame being arrangable in the car and said lid being movable in relation to said frame, so that the cover panel has a closed position for covering a compartment of the car, and an open position allowing access to the compartment via the frame.

The wind breaker according to the invention provides the advantage that access to the compartment is allowed while the wind breaker device is still arranged on the vehicle via the frame. Thus, it is not necessary to disconnect the wind breaker device from the vehicle in order to gain access to the compartment, and there is consequently no risk of inadvertently altering the position of the wind blocker panel in relation to the vehicle and to the seats. In contrast, the wind breaker provides a convenient possibility to achieve access to the vehicle compartment via the frame when the cover panel is in its open position, without compromising the covering and air flow directing functions of the cover panel when in its closed position.

Advantageously, the frame and the lid may be formed as a unitary structure. This is a simple and inexpensive way of designing the frame and lid. In addition, the frame may be provided with connector means allowing detachable connection to the vehicle. The connector means may include e.g. strips or borders.

The cover could advantageously comprise a sheet of material, wherein the lid is defined by a slot in said sheet of material. Advantageously, the sheet of material is a pliable material, preferably a web. In this case, the lid will be formed by a part of the web that may easily be folded to an open position in relation to the remaining frame part of the web. The frame may advantageously be arranged in a strip or border structure in which the pliable material may be stretched to form a flat panel. In this embodiment, the borders may advantageously form connector means for connection to the convertible.

In an alternative embodiment, the frame and lid may be formed as separate structures. In this case, some form of hinges or other fastening means may be provided to connect the lid to the frame. Although providing an alternative to the above-mentioned construction, this embodiment would however normally require higher assembly and manufacturing costs than when the frame and lid are formed as a unitary structure.

Preferably, the lid and frame are provided with reclosable opening means. Such reclosable opening means could advantageously be a zip fastener or a Velcro® hook-and-loop fastener. Zip fasteners are particularly preferred due to their simple and reliable construction.

In a particularly advantageous embodiment, the cover may comprise a unitary structure of a pliable web material, wherein the lid and frame are defined by means of an essentially C-shaped slot. The slot may be open and closed by means of a zip fastener arranged along the slot, connecting the frame and the lid. Advantageously, the zip fastener may be of the type having two sliders, such that the slot may be opened and closed anywhere around the length of the C-shaped slot.

In all of the above mentioned embodiments, the wind blocker may be of the type comprising a panel being foldable about a central axis, and the cover may be of the type likewise comprising a panel being foldable about a central axis. Thus, the foldable wind breaker device may be folded to a storage position by folding the cover and wind blocker panels along their connection axis, as well as along their central axes, respectively. This construction enables the wind breaker to be folded to a particularly dense and non-cumbersome storage position. Advantageously, the cover may define a frame and a lid on each side, respectively of the central axis.

### Brief description of the accompanying drawings

Other features and advantages of the present invention will appear more clearly from the following description of exemplary embodiments, wherein
Fig. 1 illustrates an embodiment of a wind breaker device according to the invention.
Fig. 2 illustrates the wind breaker device of Fig. 1 when in use in a convertible.
Fig. 3 illustrates a second embodiment of a wind breaker device according to the invention.

### Detailed description of preferred embodiments of the invention

Features and advantages of the method and the device according to invention will now be described in relation to an exemplary embodiment.

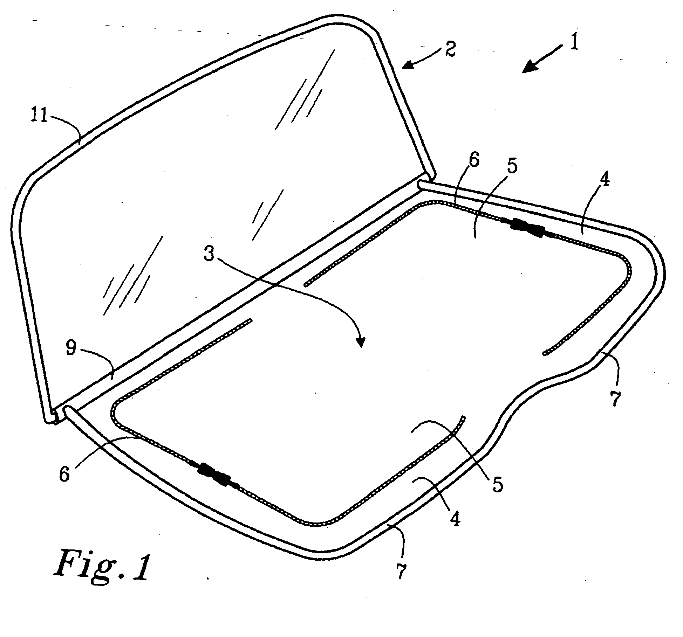

Fig. 1 illustrates an embodiment of a foldable wind breaker device 1 according to the invention, when in an unfolded position. The wind breaker device 1 comprises a wind blocker panel 2 for blocking the air flow behind front seats when arranged in a convertible, and a cover panel 3 being connected to the wind blocker panel 2 along a connection axis 9. The wind breaker device is foldable about the connection axis 9 to a storage position in which the wind blocker panel 2 is arranged essentially on top of the cover panel 3. In addition, the angle formed between the cover panel 3 and the wind blocker panel 2 in an unfolded position may be adjusted so as to suit a particular vehicle by adjusting the angular position of the wind blocker panel 2 in relation to the cover panel 3 about the connector axis 9.

In the illustrated embodiment, the cover panel 3 defines two frames 4 and lids 5, where the frames 4 are arrangable in the convertible and the lids 5 are movable in relation to said frames 4, so that the cover panel 1 has a closed position for covering a compartment of the convertible, and an open position for allowing access to the compartment via one or both of the frames 4.

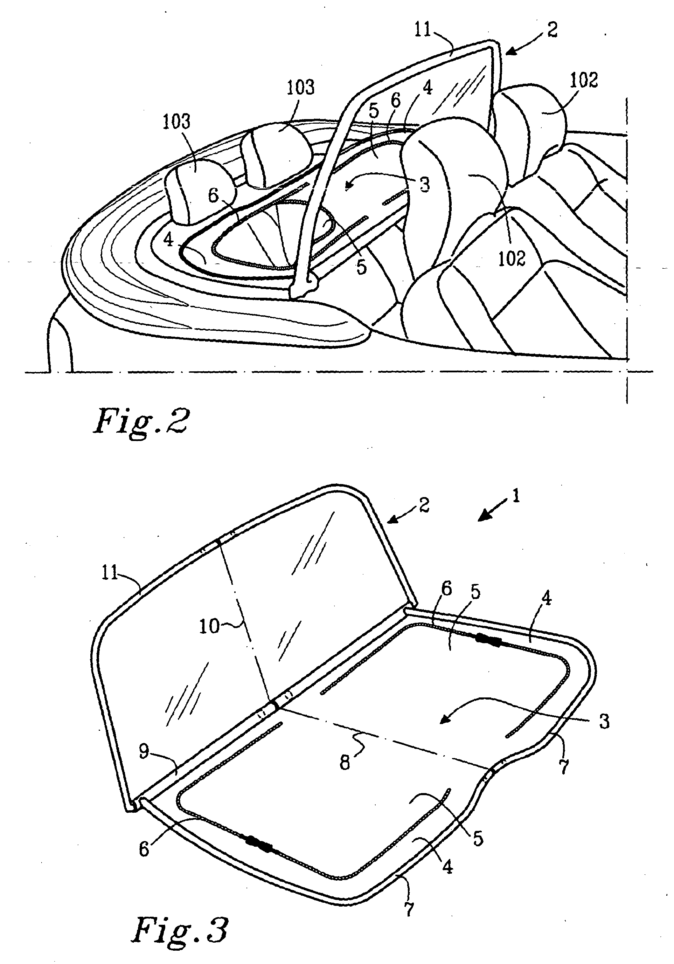

Fig. 2 illustrates how the wind breaker 1 may be installed in a convertible car. The wind blocker panel 2 extends essentially vertically behind the head rests of the front seats 102 of the convertible car, whereas the cover panel 3 extends essentially horizontally in relation to the car so as to cover a compartment space 104. In this case, the cover panel 3 is arranged to extend from a position behind the front seats 102 to a position in front of the neck rests of the back seat 103. As is understood from Fig. 2, the cover panel 1 is detachably fixed to the convertible 100 via the frames 4. Thus, the lids 5 may be open and closed without need of rearranging the cover panel 1 in relation to the convertible. Consequently, there is no risk that the position of the wind blocker panel 2 is inadvertently altered when opening or closing the lids 5.

The embodiment illustrated in Figs 1 and 2 comprises cover panel 3 defining two frames 4 and two lids 5. This configuration is especially advantageous as the lids 5 may be arranged so that they are each reachable from one side of the convertible, respectively. Accordingly, convenient access to the compartment space 104 of the convertible is enabled.

In the illustrated embodiment, the frames 4 and lids 5 are formed as a unitary structure. Each lid 5 is formed from the same material is as the frame 4. This is a particularly simple construction requiring few parts and little assembly. Preferably, the cover comprises a sheet of material, wherein the lid is defined by a slot in said sheet of material. In the illustrated embodiment, two C-shaped slots in a sheet of material defines the two lids 5 and frames 4. The cover comprises a web material, being pliable such that the cover panel 3 may easily be opened by folding a lid 5 in relation to a frame 4. Thus, by using pliable material, no additional hinge or seam connecting the lid 5 and the frame 4 is necessary for achieving a cover panel 3 that may be opened and closed a number of times.

However, the lid 5 could in other embodiments be formed from as a structure being separate from the frame 4, such as a separate piece of material being connected to the frame 4 by means of e.g. hinges, seams etc.

In the illustrated embodiments, the frames 4 are arranged in borders 7 extending around the circumference of the cover panel 3. The borders 7 constitute vehicle connector means for connecting the cover panel 3 to the convertible. When the cover panel 3 comprises pliable material, the borders 7 may have the additional function of forming a relatively stiff structure in relation to which the pliable material may be stretched so as to form a flat panel. In the illustrated embodiment, the wind blocker panel 2 is formed from a pliable material being stretched between borders 11 to form a flat panel.

Advantageously, the lid 5 is provided with reclosable opening means. In the illustrated embodiment, the reclosable opening means comprises zip fasteners exending along the slots 6. In particular, the zip fasteners each is provided with two sliders, enabling opening of the lid 5 anywhere along the slot 6 for access to the compartment space 104.

Naturally other reclosable opening means may be used such as e.g. Velcro fasteners.

Fig. 3 illustrates an alternative embodiment of a wind breaker being of the type wherein the wind blocker panel 2 is foldable about a central axis 10 and the cover panel 3 is foldable about a central axis 8. In the illustrated embodiment, the borders 11 of the wind blocker panel 2 comprises two C-shaped portions, that are interconnected at a central axis 10 so as to be foldable about said central axis 10. The pliable material forms a continuous sheet between the two C-shaped portions of the borders 11 and will naturally be foldable about the central axis 10.

Similarly, the borders 7 of the cover panel 3 form two C-shaped portions being interconnected at a central axis 8 so as to be foldable about said central axis 8. The pliable material extends between the two C-shaped portions.

Other embodiments are possible, e.g. wherein each half of the cover panel 3 on each side of the central axis 8 is surrounded by a border 7 forming a square-shaped frame. The two borders 7 extending along the central axis 8 may be interconnected so as to be foldable about the axis. A similar construction may be used for the wind blocker panel 2, alone or in combination with the cover panel 3.

The cover central axis 8 of the cover panel 2 and the wind blocker central axis 10 of the wind blocker panel 2 are arranged in line with each other, such that the wind breaker device 1 is foldable about the central axes 8, 10. Advantageously, for attaining a storage position, the wind breaker device 1 may first be folded about the connection axis 9 between the wind blocker panel 2 and the cover panel 3, and then folded about the central axes 8 and 10 of the cover panel 3 and the wind blocker panel 2.

In the embodiment illustrated in Fig. 3, the cover panel 3, conveniently defines a frame 4 and a lid 5 on each side of the central axis 8.

Naturally, a number of alternative embodiments of the invention are possible. The size and shape of the lids and frames may be modified. In addition, the shapes of the wind blocker panel and the cover panel may be adapted to suit different types of convertibles. Connector means for connecting the cover panel to the car may have various forms and functions to obtain a releasable connection to the convertible car.

## Claims

1. Foldable wind breaker for a convertible car comprising
a wind blocker panel (2) for blocking air flow behind seats in the car, a a cover panel (3) being connected to the wind blocker panel (2), wherein
said cover panel (3) defines a frame (4) and a lid (5), said frame (4) being arrangable in the car and said lid (5) being movable in relation to said frame (4), so that the cover panel (3) has a closed position for covering a compartment (104) of the car, and an open position allowing access to the compartment (104) via the frame (4), **characterized in that**
said frame (4) and lid (5) are formed as a unitary structure and that said cover panel (3) comprises a sheet of pliable material, preferably a web, such that the cover panel (3) may be opened by folding said lid (5) in relation to said frame (4).

2. A wind breaker according to claim 1, wherein the cover panel (3) comprises a sheet of material, wherein the frame (4) and lid (5) are defined by a slot (6) in said sheet of material.

3. A wind breaker according to any one of the preceding claims, wherein the lid (5) is provided with reclosable opening means.

4. A wind breaker according to claim 3, wherein said reclosable opening means comprises a zip fastener or a Velcro® fastener.

5. A wind breaker according to any one of the preceding claims, wherein the wind blocker panel (2) is foldable about a blocker central axis (10) and the cover panel (3) is foldable about a cover central axis (8).

6. A wind breaker according to claim 5, wherein the cover panel (3) defines a frame (4) and a lid (5) on each side, respectively of the cover central axis (8).

7. A wind breaker according to any one of the preceding claims wherein the frame (4) is provided with connector means (7) for connection to the convertible.

## Patentansprüche

1. Ein faltbarer Windschutz für ein Cabriolet, umfassend:
eine Windschottscheibe (2) zum Zurückhalten des Luftstromes hinter den Autositzen, und
eine Abdeckplatte (3), die mit der Windschottscheibe (2) verbunden ist, wobei die Abdeckplatte (3) einen Rahmen (4) und einen Deckel (5) definiert, wobei der Rahmen (4) im Auto angebracht werden kann und der Deckel (5) im Bezug auf den Rahmen (4) beweglich ist, sodass die Abdeckplatte (3) eine geschlossene Stellung zum Abdecken eines Abteils (104) des Autos und eine offene Position hat, in welcher durch den Rahmen (4) hindurch Zugang zu dem Abteil (104) möglich ist, **dadurch gekennzeichnet, dass** der Rahmen (4) und der Deckel (5) als eine einstückige Struktur ausgebildet sind, und dass die Abdeckplatte (3) eine Lage aus faltbarem Material, vorzugsweise einem Gewebe, enthält, so dass die Abdeckplatte (3) durch Falten des Deckels (5) in Bezug auf den Rahmen (4) geöffnet werden kann.

2. Windschutz nach Anspruch 1, **dadurch gekennzeichnet, dass** die Abdeckplatte (3) eine Lage aus einem Material enthält, und dass der Rahmen (4) und der Deckel (5) durch einen Schlitz (6) in der Lage Material definiert sind.

3. Windschutz nach einem der vorhergehenden Ansprüche, **dadurch gekennzeichnet, dass** der Deckel (5) mit wiederverschließbaren Öffnungsmitteln versehen ist.

4. Windschutz nach Anspruch 3, **dadurch gekennzeichnet, dass** die wiederverschließbaren Öffnungsmittel einen Reißverschluss oder einen Klettverschluss umfassen.

5. Windschutz nach einem der vorhergehenden Ansprüche, **dadurch gekennzeichnet, dass** die Windschottscheibe (2) um eine Schottmittelachse (10) herum faltbar ist und dass die Abdeckplatte (3) um eine Abdeckungsmittelachse (8) herum faltbar ist.

6. Windschutz nach Anspruch 5, **dadurch gekennzeichnet, dass** die Abdeckplatte (3) einen Rahmen (4) und einen Deckel (5) auf jeder Seite bezogen auf die Abdeckungsmittelachse (8) definiert.

7. Windschutz nach einem der vorhergehenden Ansprüche, **dadurch gekennzeichnet, dass** der Rahmen (4) mit Verbindungsmitteln (7) zum Verbinden mit dem Cabriolet versehen ist.

## Revendications

1. Pare-brise rabattable pour voiture décapotable, comprenant :
un panneau brise-vent (2) pour bloquer le flux d'air derrière des sièges situés dans la voiture, et un panneau de couverture (3) relié au panneau brise-vent (2), dans lequel
ledit panneau de couverture (3) définit un cadre (4) et un couvercle (5), ledit cadre (4) pouvant être mis en place dans la voiture et ledit couvercle (5) étant mobile en relation avec ledit cadre (4), de telle sorte que le panneau de couverture (3) ait une position fermée pour recouvrir un compartiment (104) de la voiture, et une position ouverte permettant l'accès au compartiment (104) par l'intermédiaire du cadre (4), ***caractérisé en ce que***
lesdits cadre (4) et couvercle (5) adoptent la forme d'une structure unitaire, et ***en ce que*** ledit panneau de couverture (3) comprend une feuille de matériau pliable, de préférence une toile, de telle sorte que le panneau de couverture (3) puisse être ouvert en rabattant ledit couvercle (5) par rapport audit cadre (4).

2. Pare-brise selon la revendication 1, dans lequel ledit panneau de couverture (3) comprend une feuille de matériau, dans lequel le cadre (4) et le couvercle (5) sont définis par une fente (6) dans ladite feuille de matériau.

3. Pare-brise selon l'une quelconque des revendications précédentes, dans lequel le couvercle (5) est équipé de moyens d'ouverture refermables.

4. Pare-brise selon la revendication 3, dans lequel lesdits moyens d'ouverture refermables comprennent une fermeture à glissière ou une fermeture par bandes Velcro®.

5. Pare-brise selon l'une quelconque des revendications précédentes, dans lequel le panneau brise-vent (2) est repliable autour d'un axe central (10) du brise-vent et le panneau de couverture (3) est repliable autour d'un axe central (8) de couverture.

6. Pare-brise selon la revendication 5, dans lequel le panneau de couverture (3) définit un cadre (4) et un couvercle (5) de chaque côté respectivement de l'axe central (8) de couverture.

7. Pare-brise selon l'une quelconque des revendications précédentes, dans lequel le cadre (4) est équipé de moyens de raccordement (7) pour un montage sur la voiture décapotable.
